# EUROPEAN PATENT APPLICATION

(11) **EP 4 704 003 A1**
(43) Date of publication of application: **04.03.2026**
(21) Application number: 25197898.7
(22) Date of filing: 25.08.2025
(51) Int. Cl.: G06Q 10/20, B64F 5/60, G06Q 50/40

(54) **ENHANCED AIRCRAFT INSPECTION USING PERSONAL ELECTRONIC DEVICE**

(30) Priority: 29.08.2024 US 202418819456
(71) Applicant: ARINC Incorporated, Annapolis, MD 21401 (US)
(72) Inventor: KRENZ, Michael J., Roscoe, OL (US); LEEDOM, David L., Center Point, IA (US)
(74) Representative: Dehns

(57) **Abstract**

Generally discussed herein are systems, apparatuses, and methods for aiding a pre-flight inspection of an aircraft. This includes a system with processor (102), a memory (104), a camera (114), a user interface (106) and a communications device (112). The user interface can include a user input system and a user output system. The user interface can be configured for presenting a graphical checklist for the pre-flight inspection of the aircraft. The memory includes, instructions, the instructions, when executed by the processor, cause the processor to determine a result of the pre-flight inspection for display on the graphical checklist, wherein the result is based upon at least a first data obtained from imaging a first onboard system of aircraft using the camera.

## Description

### TECHNICAL FIELD

Embodiments discussed herein generally relate to aircraft pre-flight or post-flight inspections, and more particularly to a system and method for performing a walk around inspection of an aircraft with the aid of a personal electronic device.

### BACKGROUND

In order to comply with the regulations of the Federal Aviation Administration, International Civil Aviation Organization, or other regulators, it is necessary to gather and consider appropriate information before and after flight. Similarly, certain information may need to be gathered and considered before and after flight in order to comply with an airline's company policies, and to generally provide for safe operation of an aircraft. This information is typically gathered during a preflight or a post flight inspection.

One aspect of the pre or post flight inspection may include a walk-around inspection of the aircraft. These inspections may be performed by flight crew using printed material such as a checklist.

However, use of the printed checklist to perform walk around inspections of the aircraft may present several problems. First, printed checklists may be unnecessarily time consuming to complete. Inspections may require aspects of the checklist be initially performed in the cockpit followed by additional steps being performed during the walk around the aircraft. Furthermore, aspects of the checklist may require items be powered on in the cockpit, then checked during the walk around, and then powered off back in the cockpit. Such a multi-step process can consume time and power. In addition, the printed checklist are not able to highlight problem areas or provide crew insight into measurements taken of various systems during the walk around. This is because printed checklists are static documents that cannot provide information beyond what is printed on the page. Additionally, current methods for performing a walk around inspection of an aircraft do not provide dynamic communication of the results of the inspection or compliance information in real-time.

Therefore, there exists a need for improved apparatuses, methods and systems for performing and documenting a walk around inspection of an aircraft.

### BRIEF DESCRIPTION OF THE DRAWINGS

In the drawings, which are not necessarily drawn to scale, like numerals can describe similar components in different views. Like numerals having different letter suffixes can represent different instances of similar components. The drawings illustrate generally, by way of example, but not by way of limitation, various embodiments or examples discussed in the present document.
FIG. 1A illustrates, by way of example, is a diagram of a system for performing a walk around inspection of an aircraft.
FIG. 1B illustrates, by way of example, a personal electronic device that can implement the system of FIG. 1A.
FIG. 2 illustrates, by way of example, a diagram of the personal electronic device of FIG. 1B communicating with one or more of a plurality of aircraft systems during a pre-flight or post-flight walk around inspection of an aircraft.
FIG. 3 illustrates, by way of example, a diagram of the personal electronic device of FIG. 1B using a camera to gather first data regarding a first system of the plurality of aircraft systems via indicia and the personal electronic device communicating with a second of the plurality of aircraft systems to obtain second data during a pre-flight or post-flight walk around inspection of an aircraft.
FIG. 4 illustrates, by way of example, a block diagram of an embodiment of a machine upon which one or more processes or operations (e.g., methods) discussed herein may be performed.
FIG. 5 illustrates, by way of example, a block diagram of an example of a software architecture that may be installed on a machine, according to some example embodiments.

### DETAILED DESCRIPTION

This disclosure generally relates to improvements in aircraft pre-flight or post-flight inspections. One or more embodiments may help in providing a faster, more accurate and less burdensome digitized system for performing a walk around inspection of an aircraft with the aid of a personal electronic device.

Currently, a walk around inspection of an aircraft relies on printed checklists. Such printed checklists have several drawbacks as discussed previously. The systems, apparatuses and methods presented here provide an approach to address these and other limitations of current pre-flight and post-flight inspections.

The present application discloses systems, apparatuses and methods that are augmented with data obtained using the personal electronic device. Such data can include first data gathered using a camera of the personal electronic device. This data can include measurements of aircraft systems (e.g., measurement of a strut of a landing gear), position data and other data. Additionally, the personal electronic device can communicate with one or more aircraft systems to obtain second data during the walk around inspection of the aircraft as further discussed herein. The first data and/or the second data can be displayed on the personal electronic device for immediate review by the pilot or crew during the walk around. This approach can address the limitations of current pre-flight and post-flight inspections discussed previously. By augmenting and automating the inspection process with data gathering using the personal electronic device, inspection speed and efficiency can be improved. Additionally, the systems, methods and apparatuses disclosed can be used as a cross-check on engine systems providing another methodology to ensure all checks are completed and identify possible problems with the aircraft.

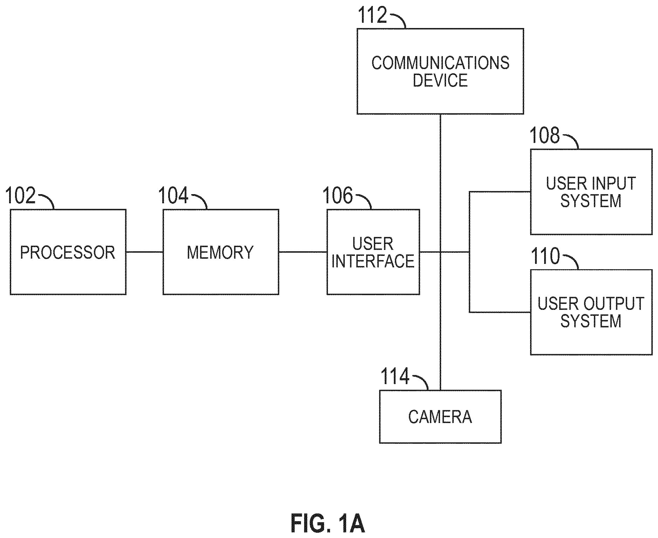

FIG. 1A is a system 100 for completing a walk around inspection of an aircraft. The system 100 may include a processor 102, a memory 104, and a user interface 106. The user interface 106 also includes a user input system 108 and a user output system 110. The user interface 106 is configured for presenting a graphical checklist for a walk around inspection of an aircraft. The system 100 also includes a communications device 112. The communications device 112 is configured for communicating with one or more onboard systems of the aircraft. The system 100, including the processor 102, memory 104, user interface 106, communications device 112 and a camera 114 can be used to perform the inspection of the aircraft as further discussed herein.

The system 100 may be used to perform an inspection of an aircraft, specifically a walk around inspection before or after flight. The inspection may include an inspection of the elements of an aircraft for security, safety, maintenance, and operational compliance. For example, the walk around inspection may include an inspection of components/systems of the aircraft from the exterior of the aircraft. The system 100 may be configured to be lightweight and handheld in order for it to be easily carried by a user during the inspection. The system 100 may optionally include a strap, handle, clip, or other means for handling or securing the system 100 to the person of an operator or elsewhere. The system 100 may optionally include the camera 114 for taking photographs or videos during the inspection of the aircraft.

The communications device 112 of the system 100 shown in FIG. 1A is configured for both receiving and sending information. For example, the communications device 112 may be configured for receiving second data from the aircraft, and also for communicating the results of the inspection to an on board aircraft system or other entity. The communications device 112 may be a wireless communications device, cellular communications device, modem, or any other suitable device for sending and receiving information with a data network, such as the internet.

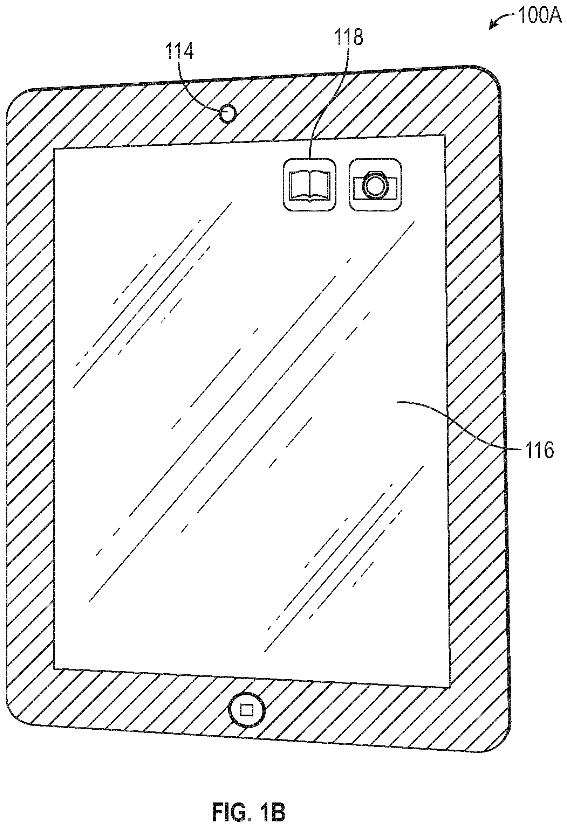

FIG. 1B shows the system for completing a preflight inspection of an aircraft in one embodiment of the present disclosure. The system may be a personal electronic device 100A, such as a hand held mobile device or wearable device (e.g., a tablet computer, a smart phone, Augmented Reality (AR) device, or the like). In one embodiment, the system 100 may include the camera 114 for taking photographs or videos during the inspection of the aircraft. The camera 114 can be an imaging device triggered by an inspection application or a selectable user interface element to initiate capture of a video stream or succession of images and pass the video stream or succession of images to the inspection application for processing according to the one or more methods described in the present disclosure.

FIG. 1B illustrates an example of the personal electronic device 100A executing a mobile operating system (e.g., IOS^{™}, ANDROID^{™}, WINDOWS^{®} Phone, or other mobile operating systems), consistent with some embodiments. In one embodiment, the personal electronic device 100A includes a touch screen operable to receive tactile data from a user. For instance, the user (pilot or other crew member) may physically touch the personal electronic device 100A, and in response to the touch, the personal electronic device 100A may determine tactile data such as touch location, touch force, or gesture motion. In various example embodiments, the personal electronic device 100A displays a home screen 116 (e.g., Springboard on IOS^{™}) operable to launch applications or otherwise manage various aspects of the personal electronic device 100A including an inspection checklist. In some example embodiments, the home screen 116 provides status information such as battery life, connectivity, or other hardware statuses. The user can activate user interface elements by touching an area occupied by a respective user interface element. In this manner, the user interacts with the applications of the personal electronic device 100A. For example, touching the area occupied by a particular icon included in the home screen 116 causes launching of an application corresponding to the particular icon.

Varieties of applications (also referred to as "apps") can be executing on the personal electronic device 100A, such as native applications (e.g., applications programmed in Objective-C, Swift, or another suitable language running on IOS^{™}, or applications programmed in Java running on ANDROID^{™}), mobile web applications (e.g., applications written in Hypertext Markup Language-5 (HTML5)), or hybrid applications (e.g., a native shell application that launches an HTML5 session). For example, the personal electronic device 100A includes a messaging app, an audio recording app, a camera app, a book reader app, a media app, a fitness app, a file management app, a location app, a browser app, a settings app, a contacts app, a telephone call app, or other apps (e.g., gaming apps, social networking apps, biometric monitoring apps). In another example, the personal electronic device 100A includes an aircraft inspection app 118, consistent with some embodiments, that populates an inspection checklist appropriate for the aircraft. According to further embodiments, the aircraft inspection app 118, determines and completes, without user interaction, one or more items the inspection checklist using data gathered from communicating with the aircraft and/or using data gathered by use of the personal electronic device 100A (e.g., first data gathered using the camera 114).

Aircraft inspection app 118 can be specifically configured for different types of aircraft, for example. The aircraft inspection app 118 can present data in the manner of a checklist but can include data that is auto populated/determined without user input. This data can be obtained from the PED 100A and/or the aircraft. The aircraft inspection app 118 can include alerts, for example, to alert the user to any anomalies detected during the walk-around or via the remote sensing. For example, if the remote sensing says that the spoilers are extended, but the PED 100A via the camera 114 detects they are retracted, an alert of a potential issue can be issued via the aircraft inspection app 118. The aircraft inspection app 118 can direct the user to location of a gauge for review based upon the aircraft type/model. In some cases, the aircraft inspection app 118 can direct user as to where to look to review the gauge. The aircraft inspection app 118 can display desired information that includes at least a name of the first onboard system and/or an indication via user interface if an onboard system is within an acceptable operational range or outside an acceptable operational range according to a type of aircraft and current weather conditions. However, other information can also be displayed. For example, the aircraft inspection app 118 can populate automatically without user input and display one or more of: Auxiliary fuel pump - On, if applicable; Flight controls - Checked, Free and correct; Instruments and radios - Checked and set; Landing gear- Checked; Altimeter - Set; Directional gyro - Set; Fuel gauges - Checked; Trim - Set; Magnetos - Checked; Engine idle - checked; Flaps - As required; Action - Engine instruments checked; etc.

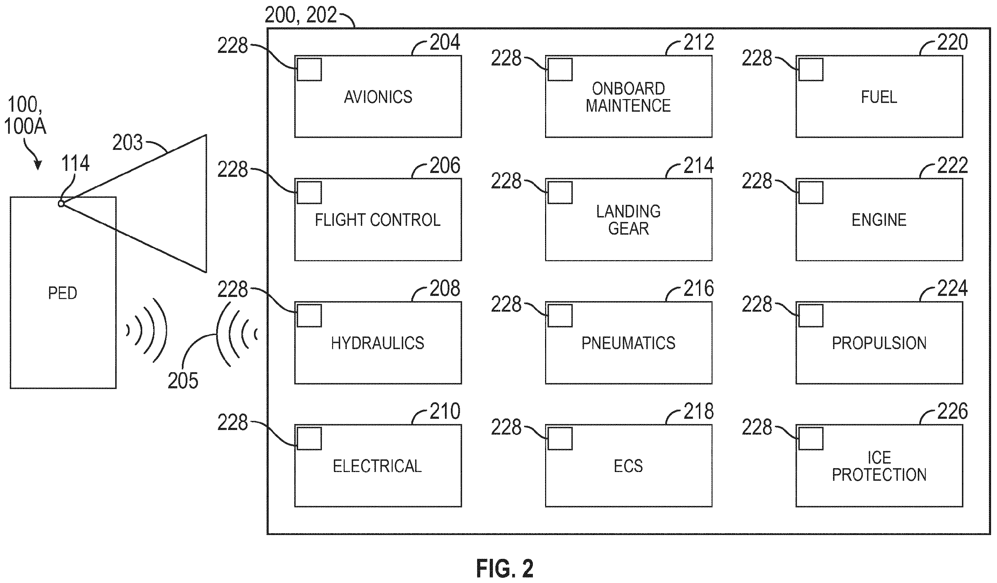

FIG. 2 shows an example of the system 200 (e.g., the personal electronic device 100A (PED)) interacting (imaging and/or communicating) with one or more of a plurality of onboard systems 202 of an aircraft 200 to obtain first data 203 and/or second data 205. The plurality of onboard aircraft systems 202 can include, but are not limited to: avionics 204, flight control 206, hydraulics 208, electrical 210, onboard maintenance 212, landing gear 214, pneumatics 216, environmental control system (ECS) 218, fuel 220, engine 222, propulsion 224 and ice protection 226.

Communication between the PED 100A and the aircraft 200 can be via known wireless modality. As an example, the PED 100A can communicate with one or more sensors 228 of the avionics 204, flight control 206, hydraulics 208, electrical 210, onboard maintenance 212, landing gear 214, pneumatics 216, environmental control system (ECS) 218, fuel 220, engine 222, propulsion 224 or ice protection 226 to obtain the second data 205. Additionally, the PED 100A can include the camera 114 to perform visual (imaging) of one or more of the avionics 204, flight control 206, hydraulics 208, electrical 210, onboard maintenance 212, landing gear 214, pneumatics 216, environmental control system (ECS) 218, fuel 220, engine 222, propulsion 224 or ice protection 226 to obtain the first data 203. Examples of such visual inspection are described in further detail herein.

Remote sensing inputs such as from the sensors 228 can be obtained from one or more of the plurality of onboard aircraft systems 202. For example, Rotary Variable Differential Transformer (RVDTs) can provide the second data 205 for control surfaces, the camera 114 can be used to take video (first data 203) for checking of hard to see items. The first data 203 and/or second data 205 can be integrated with status/video and other features of the application and can be displayed on the PED 100A. The PED 100A mounted camera 114 can aid the user by augmenting visuals (e.g. by providing zoom capability, alternative imaging modality) and/or by providing some image analysis (e.g., by loading component name, by automatically identifying component (e.g., detection of spoiler extension with the camera 114 pointed at the spoilers on the wing), etc.). Thus, the PED 100A can be configured to display, via the user interface, an augmented visual of the first onboard system and perform image analysis to determine and display a desired information regarding the first onboard system.

The avionics 204 can include electronic systems such as communication, navigation, and the management of various onboard functions. Thus, the avionics 204 can encompass various functions including communication, navigation, surveillance, flight control, engine control, flight recorders, lighting systems, threat detection, etc. As such, the avionics 204 can include flight instruments, radios, navigation systems (e.g., GPS), instrument landing systems, etc. The flight control 206 can allow pilots to manipulate and control the aircraft. Primary flight controls include elevators (for pitch), ailerons (for roll), and the rudder (for yaw). The hydraulics 208 and/or pneumatics 216 can convert control inputs to surface movements, operates landing gear, flaps, slats, and wheel brakes. The electrical 210 can include batteries, generators, switches, and circuit breakers. Backup power can come from a ram air turbine or hydrazine-powered turbines. The onboard maintenance system 212 can continuously monitor and record the status of components of the aircraft systems. Data of this onboard maintenance system 212 can include known deficiencies or faults for the aircraft, maintenance records, engine data, Aircraft Condition Monitoring data, line replaceable unit data, and any other information. The landing gear 214 retracts/extends the landing gear and provides braking. Anti-skid systems enhance braking performance. ECS 218 pressurizes the cabin, provides heating, and cools electronic systems. Fuel 220 stores and delivers aviation fuel to the engines and auxiliary power unit (APU). Engine 222 and propulsion 224 can include engine installations, controls, fire detection/protection, and thrust reversal. Ice protection 226 can prevent ice formation (anti-icing) or remove ice after it forms (de-icing).

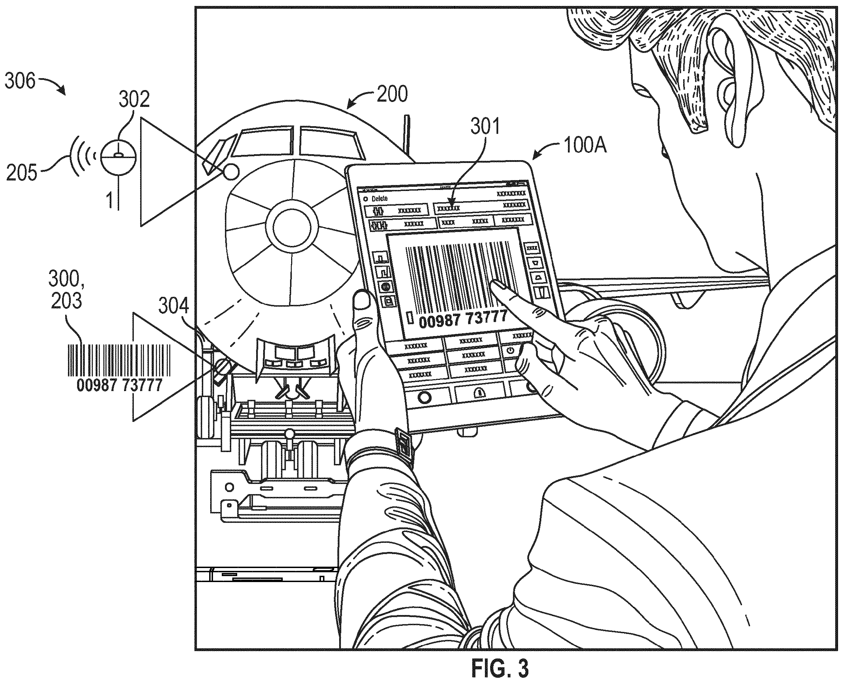

Typical pre-flight inspection includes general inspection of the plurality of onboard aircraft systems 202 for damage, operation integrity (ability of system to operate), fluid levels, pressures, checks of the sensors 228, etc. As illustrated in FIG. 2 and again additionally in FIG. 3, the PED 100A can used to remotely perform certain inspection activities like checking sensors 228. Additionally, the camera 114 of the PED 100A can be used to image one or more of the plurality of onboard systems 202 to augment the inspection. For example, the camera 114 and the PED 100A, without user input and based upon the image data from the camera 114, can be used to determine if a strut of the landing gear 214 is at proper extension given plane type, weight and weather conditions. The camera 114 and PED 100A can augment and assist this determination by automatically and without user input or interaction, after the image is captured, determine and indicate (display) if the strut extension is proper given the above criteria. This eliminates a time consuming process of manually looking up strut extension data that is used with printed checklists. According to another example, the camera 114 and the PED 100A can be used to perform one or more light checks (e.g., confirm lighting systems are operational) without user input and based upon the image data from the camera 114.

According to one example, the PED 100A can communicate via the sensors 228 to review sensor data regarding hydraulic pressure of an accumulator. The PED 100A can determine if the hydraulic pressure of the accumulator is in an acceptable range given the current temperature. Again, this determination and displaying of such information as a checklist item can be performed automatically and without user input or interaction, after such data is captured via wireless communication between the PED 100A and an applicable one of the sensors 228. This eliminates a time consuming process of manually looking up acceptable hydraulic pressure ranges for the accumulator that is used with printed checklists.

According to another example, during the preflight walkaround, one or more of the plurality of aircraft systems 202 can communicate with the PED 100A based on a proximity to the PED 100A to one or more components of the plurality of aircraft systems 202. Thus, the one or more of the plurality of aircraft systems 202 can communicate and respond appropriately dependent upon the location of the PED 100A thereto. Therefore, at least the second data 205 can be obtained from one of the sensors 228 of the plurality of onboard aircraft systems 202 only when the communications device of the PED 100A is brought into a close proximity (e.g., a few meters) of the sensor 228 during a walk around of the aircraft. Such proximity based communication can be via electromagnetic transmission modality such as RFID or another mechanism such as Bluetooth^{™}, Wi-Fi, barcode, QR code, wired ID chips, ultra-wide band or other technique or mechanism as known in the art. Thus, proximity communication between the PED 100A and the one or more of the plurality of aircraft systems 202 can be used for the turning loads or sensors on/off, or positioning surfaces/controls as appropriate to allow checking. Such proximity based response and interaction with the application of the PED 100A could either be fully automatic or could be initiated and guided via prompts and interaction of the user with the PED 100A using the application discussed previously.

According to yet another example, the PED 100A can communicate with the one or more of the plurality of aircraft systems 202 during the walkaround inspection to obtain data indicative of expendables quantities (e.g. fuel quantity, engine oil quantity, hydraulic quantity, oxygen quantity, fresh/waste water quantity, etc.) such that such expendables quantities (sensed values) can be checked against relevant sight gauges visible during the walkaround inspection. Such data can be communicated to the PED 100A based upon proximity to the one or more of the plurality of aircraft systems 202 or sight gauges, for example. Alternatively, such data can be generally accessible on the PED 100A during the walkaround inspection. Thus, the PED 100A can have access to and can display gauges and other sensed data that would otherwise only be available in the cockpit during the walkaround inspection when the PED 100A is outside the cockpit. According to further examples, the PED 100A can be used during the walkaround inspection to control actuator(s) of the one or more of the plurality of aircraft systems 202. Thus, for example, as commanded using the PED 100A during the walkaround inspection, a strut of the landing gear can be calculated using the PED 100A to determine if the strut is properly extended to verify functioning of the strut. According to another example, the PED 100A can receive data that can be used to verify/confirm functioning of the various of the lighting systems (e.g., solid state switch functioning) without the need to perform a light check. Thus, the PED 100A can be used to avoid turning on exterior lights of the aircraft in some circumstances. In other examples, the PED 100A can be used to control (e.g., turn on and off) various of the lights of the lighting system as desired during the walkaround inspection.

FIG. 3 shows the PED 100A being used to assist in the preflight inspection of the aircraft 200. The PED 100A utilizes the camera (not shown) to image indicia 300 on the aircraft 200. The indicia 300 can include but is not limited to: QR code, bar code, serial number or other identifier. The indicia 300 is physically located on the aircraft 200 so as to be visible/scannable by the camera. The indicia 300 can identify component/system of the aircraft (e.g., this is the right main landing gear) and/or can provide additional information (e.g., measurement information, position information, fluid level (if applicable from another sensor), pressure (if applicable from another sensor), usage data, an indication if the component/system was previously inspected for maintenance and was in proper working order, etc.). The PED 100A based upon the indicia 300 obtained with the camera can automatically indicate if the component/system appears in proper working order. This can be displayed on the PED 100A in the relevant application. As shown in FIG. 3, the PED 100A can display the result of one or more checklist items 301 on the PED 100A based upon the first data 203 gathered by the camera.

FIG. 3 additionally shows the PED 100A being used to communicate wirelessly with a sensor 302 on-board aircraft to obtain second data 205 (e.g., fluid levels) and other relevant data. According to one example as shown in FIG. 3, the PED 100A can be used for power savings on the aircraft 200. In particular, air data probes of the aircraft 200 need to be heated for inspection to insure they are working properly. Typically, such probes need to be turned on in the cockpit and then the user goes outside and has to check them manually to make sure they are heated as required. Then the use must go back into the cockpit to turn off the air data probe. According to the present example, the PED 100A communicates with the air data probes when user is out doing walk around when the PED 100A comes into close proximity (e.g., a few meters) of such probes so that they can be checked to insure they are warm. This eliminates user having to go into cockpit then out from the cockpit then back into cockpit. The PED 100A can communicate to turn the probes off when pilot is no longer in the close proximity of these probes. This saves power as it eliminates back-and-forth time lag that would otherwise occur. The air data probes can be turned on for a shorter duration.

FIG. 3 illustrates a method 306 for completing a pre-flight inspection of the aircraft 200. The method 306 includes receiving the first data 203 regarding a first onboard system of the aircraft using at least the camera of the PED 100A. Determining, without user input, a result of one or more checklist items 301 on the PED 100A based upon the first data. The method 306 includes displaying the result on the PED 100A. The method can optionally include receiving the second data 205 from the sensor 302 of at least one of the first onboard system or a second onboard system of the aircraft. As discussed above, according to one example, at least the second data 205 is obtained from the sensor of the first onboard system or the second onboard system only when the personal electronic device is brought into a close proximity with the sensor during a walk around of the aircraft. The method 306 can include determining and displaying, without user input, a desired information regarding the first onboard system. The desired information can include a measurement of a component of the first onboard system determined using the first data. The desired information can include an indication on the PED 100A if the first onboard system or the second onboard system is within an acceptable operational range or outside an acceptable operational range according to a type of aircraft and current weather conditions. The method 306 can include generating and displaying an alert on the personal electronic device of a potential anomaly. The first onboard system can be an landing gear system 304 of the aircraft 200. The first data can be obtained from the indicia 300 on a strut of the landing gear system as shown in FIG. 3. The method 306 can include displaying an augmented visual (zoomed view) of at least the first onboard system.

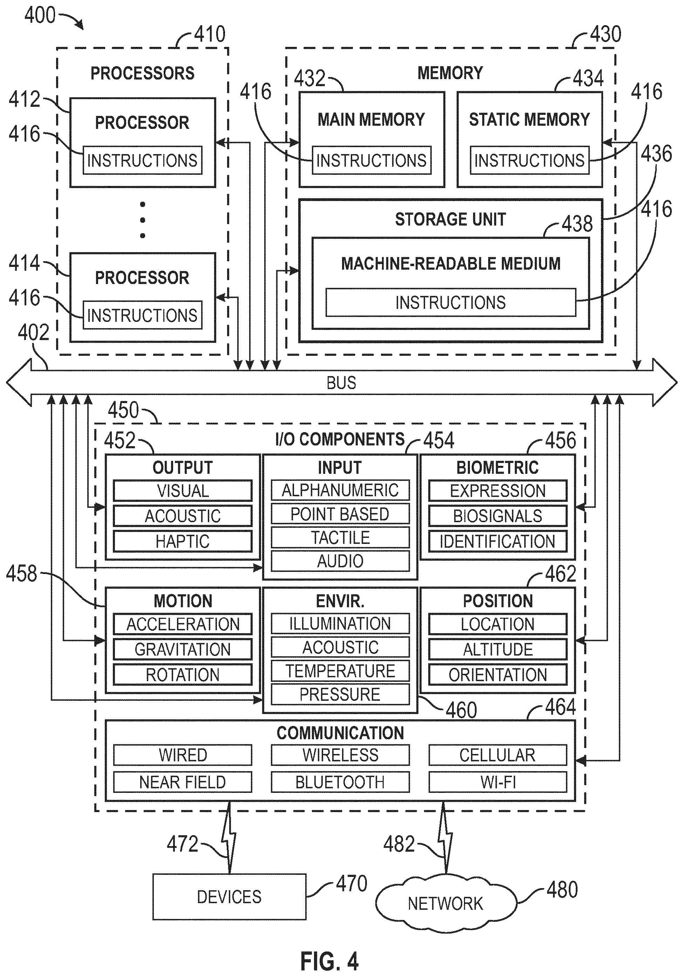

FIG. 4 illustrates a block diagram of a machine 400 upon which any one or more of the processes (e.g., methodologies) discussed herein may be performed. In alternative embodiments, the machine 400 can operate as a standalone device or can be connected (e.g., networked) to other machines. In a networked deployment, the machine 400 can operate in the capacity of a server machine, a client machine, or both in server-client network environments. In an example, the machine 400 can act as a peer machine in peer-to-peer (P2P) (or other distributed) network environment. The machine 400 can be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, can include, or can operate on, logic or a number of components, modules, or mechanisms. Modules are tangible entities (e.g., hardware) capable of performing specified operations when operating. A module includes hardware. In an example, the hardware can be specifically configured to carry out a specific operation (e.g., hardwired). In an example, the hardware can include configurable execution units (e.g., transistors, circuits, etc.) and a computer readable medium containing instructions, where the instructions configure the execution units to carry out a specific operation when in operation. The configuring can occur under the direction of the executions units or a loading mechanism. Accordingly, the execution units are communicatively coupled to the computer readable medium when the device is operating. In this example, the execution units can be a member of more than one module. For example, under operation, the execution units can be configured by a first set of instructions to implement a first module at one point in time and reconfigured by a second set of instructions to implement a second module.

Machine (e.g., computer system) 400 can include a hardware processor 402 (e.g., a central processing unit (CPU), a graphics processing unit (GPU), a hardware processor core, or any combination thereof), a main memory 404 and a static memory 406, some or all of which can communicate with each other via an interlink (e.g., bus) 408. The machine 400 can further include a display unit 410, an alphanumeric input device 412 (e.g., a keyboard), and a user interface (UI) navigation device 414 (e.g., a mouse). In an example, the display unit 410, input device 412 and UI navigation device 414 can be a touch screen display. The machine 400 can additionally include a storage device (e.g., drive unit) 416, a signal generation device 418 (e.g., a speaker), a network interface device 420, and one or more sensors 421, such as a global positioning system (GPS) sensor, compass, accelerometer, or other sensor. The machine 400 can include an output controller 428, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 416 can include a machine readable medium 422 on which is stored one or more sets of data structures or instructions 424 (e.g., software) embodying or utilized by any one or more of the process or functions described herein. The instructions 424 can also reside, completely or at least partially, within the main memory 404, within static memory 406, or within the hardware processor 402 during execution thereof by the machine 400. In an example, one or any combination of the hardware processor 402, the main memory 404, the static memory 406, or the storage device 416 can constitute machine readable media.

While the machine readable medium 422 is illustrated as a single medium, the term "machine readable medium" can include a single medium or multiple media (e.g., a centralized or distributed database, and/or associated caches and servers) configured to store the one or more instructions 424.

The term "machine readable medium" can include any medium that is capable of storing, encoding, or carrying instructions for execution by the machine 400 and that cause the machine 400 to perform any one or more of the processes of the present disclosure, or that is capable of storing, encoding or carrying data structures used by or associated with such instructions. Non-limiting machine readable medium examples can include solid-state memories, and optical and magnetic media. In an example, a massed machine readable medium comprises a machine readable medium with a plurality of particles having resting mass. Specific examples of massed machine readable media can include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In various example embodiments, portions of the network 480 can be an ad hoc network, an intranet, an extranet, a virtual private network (VPN), a local area network (LAN), a wireless LAN (WLAN), a wide area network (WAN), a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a WI-FI^{®} network, another type of network, or a combination of two or more such networks. For example, the network 480 or a portion of the network 480 may include a wireless or cellular network, and the coupling 482 may be a Code Division Multiple Access (CDMA) connection, a Global System for Mobile communications (GSM) connection, or another type of cellular or wireless coupling. In this example, the coupling 482 can implement any of a variety of types of data transfer technology, such as Single Carrier Radio Transmission Technology (1×RTT), Evolution-Data Optimized (EVDO) technology, General Packet Radio Service (GPRS) technology, Enhanced Data rates for GSM Evolution (EDGE) technology, third Generation Partnership Project (3GPP) including 3G, fifth generation wireless (5G) networks, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard-setting organizations, other long range protocols, or other data transfer technology.

In example embodiments, the instructions 424 are transmitted or received over the network 480 using a transmission medium via a network interface device (e.g., a network interface component included in the communication components 464) and utilizing any one of a number of well-known transfer protocols (e.g., Hypertext Transfer Protocol (HTTP)). Similarly, in other example embodiments, the instructions 424 are transmitted or received using a transmission medium via the coupling 472 (e.g., a peer-to-peer coupling) to the devices 470. The term "transmission medium" shall be taken to include any intangible medium that is capable of storing, encoding, or carrying the instructions 424 for execution by the machine 400, and includes digital or analog communications signals or other intangible media to facilitate communication of such software.

The machine-readable medium 438 is non-transitory (in other words, not having any transitory signals) in that it does not embody a propagating signal. However, labeling the machine-readable medium 438 "non-transitory" should not be construed to mean that the medium is incapable of movement; the medium should be considered as being transportable from one physical location to another. Additionally, since the machine-readable medium 438 is tangible, the medium may be considered to be a machine-readable device.

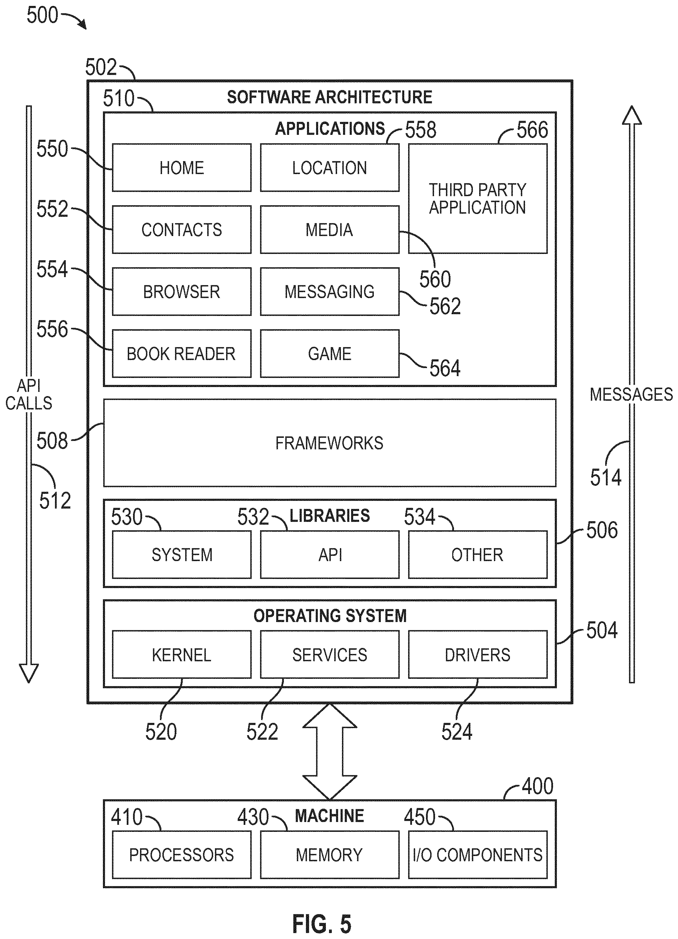

FIG. 5 is a block diagram 500 illustrating an architecture of software 502, which can be installed on the devices described above. FIG. 5 is merely a non-limiting example of a software architecture, and it will be appreciated that many other architectures can be implemented to facilitate the functionality described herein. In various embodiments, the software 502 is implemented by hardware such as machine a 400 of FIG. 4 that includes processors 410, memory 430, and I/O components 450. In this example architecture, the software 502 can be conceptualized as a stack of layers where each layer may provide a particular functionality. For example, the software 502 includes layers such as an operating system 504, libraries 506, frameworks 508, and applications 510. Operationally, the applications 510 invoke application programming interface (API) calls 512 through the software stack and receive messages 514 in response to the API calls 512, consistent with some embodiments.

In various implementations, the operating system 504 manages hardware resources and provides common services. The operating system 504 includes, for example, a kernel 520, services 522, and drivers 524. The kernel 520 acts as an abstraction layer between the hardware and the other software layers consistent with some embodiments. For example, the kernel 520 provides memory management, processor management (e.g., scheduling), component management, networking, and security settings, among other functionality. The services 522 can provide other common services for the other software layers. The drivers 524 are responsible for controlling or interfacing with the underlying hardware, according to some embodiments. For instance, the drivers 524 can include display drivers, camera drivers, BLUETOOTH^{®} drivers, flash memory drivers, serial communication drivers (e.g., Universal Serial Bus (USB) drivers), WI-FI^{®} drivers, audio drivers, power management drivers, and so forth.

In some embodiments, the libraries 506 provide a low-level common infrastructure utilized by the applications 510. The libraries 506 can include system libraries 530 (e.g., C standard library) that can provide functions such as memory allocation functions, string manipulation functions, mathematic functions, and the like. In addition, the libraries 506 can include API libraries 532 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic content on a display), database libraries (e.g., SQLite to provide various relational database functions), web libraries (e.g., WebKit to provide web browsing functionality), and the like. The libraries 506 can also include a wide variety of other libraries 534 to provide many other APIs to the applications 510.

The frameworks 508 provide a high-level common infrastructure that can be utilized by the applications 510, according to some embodiments. For example, the frameworks 508 provide various graphic user interface (GUI) functions, high-level resource management, high-level location services, and so forth. The frameworks 508 can provide a broad spectrum of other APIs that can be utilized by the applications 510, some of which may be specific to a particular operating system or platform.

In an example embodiment, the applications 510 include a home application 550, a contacts application 552, a browser application 554, a book reader application 556, a location application 558, a media application 560, a messaging application 562, a game application 564, and a broad assortment of other applications such as a third party application 566. According to some embodiments, the applications 510 are programs that execute functions defined in the programs. Various programming languages can be employed to create the applications 510, structured in a variety of manners, such as object-oriented programming languages (e.g., Objective-C, Java, or C++) or procedural programming languages (e.g., C or assembly language). In a specific example, the third party application 566 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} PHONE, or another mobile operating systems. In this example, the third party application 566 can invoke the API calls 512 provided by the operating system 504 to facilitate functionality described herein.

### Examples and Notes

The present subject matter can be described by way of several examples.

Example 1 is a system for aiding a pre-flight inspection of an aircraft, optionally comprising: a processor; a memory; a camera; a user interface, the user interface including a user input system and a user output system, the user interface configured for presenting a graphical checklist for the pre-flight inspection of the aircraft; and a communications device; wherein the memory includes, instructions, the instructions, when executed by the processor, cause the processor to determine a result of the pre-flight inspection for display on the graphical checklist, wherein the result is based upon at least a first data obtained from imaging a first onboard system of aircraft using the camera.

In Example 2, the subject matter of Example 1 optionally includes, wherein the result is additionally based upon a second data obtained from communicating with a sensor of at least one of the first onboard system or a second onboard system of the aircraft via the communications device, wherein, using at least the first data, the memory includes instructions, the instructions, when executed by the processor, cause the processor to at least one of: display, via the user interface, an augmented visual of the first onboard system and perform image analysis to determine and display a desired information regarding the first onboard system.

In Example 3, the subject matter of Example 2 optionally includes, wherein the first data is obtained from imaging indicia on the aircraft.

In Example 4, the subject matter of Examples 2-3 optionally includes, wherein the desired information includes at least a name of the first onboard system and an indication via user interface if the first onboard system is within an acceptable operational range or outside an acceptable operational range according to a type of aircraft and current weather conditions.

In Example 5, the subject matter of Example 4 optionally includes, the instructions, when executed by the processor, cause processor to: generate and display an alert of a potential anomaly with the user interface.

In Example 6, the subject matter of Example 5 optionally includes, wherein the desired information includes a measurement of a component of the first onboard system determined using the first data or a verification that the component of the first onboard system is operating correctly.

In Example 7, the subject matter of Example 6 optionally includes, wherein the first onboard system is one of: a landing gear system of the aircraft or a lighting system of the aircraft.

In Example 8, the subject matter of Examples 2-7 optionally includes, wherein at least the second data is obtained from the sensor of the first onboard system or the second onboard system only when the communications device is brought into a close proximity with the sensor during a walk around of the aircraft.

Example 9 is a method for completing a pre-flight inspection of an aircraft, optionally comprising: receiving a first data regarding a first onboard system of the aircraft using at least a camera of a personal electronic device, determining, without user input, a result of one or more checklist items on the personal electronic device based upon the first data; and displaying the result on the personal electronic device.

In Example 10, the subject matter of Example 9 optionally includes, receiving a second data from a sensor of at least one of the first onboard system or a second onboard system of the aircraft, wherein at least the second data is obtained from the sensor of the first onboard system or the second onboard system only when the personal electronic device is brought into a close proximity with the sensor during a walk around of the aircraft.

In Example 11, the subject matter of Example 10 optionally includes, determining and displaying, without user input, a desired information regarding the first onboard system, wherein the desired information includes a measurement of a component of the first onboard system determined using the first data.

In Example 12, the subject matter of Example 11 optionally includes, wherein the desired information includes an indication on the personal electronic device if the first onboard system or the second onboard system is within an acceptable operational range or outside an acceptable operational range according to a type of aircraft and current weather conditions.

In Example 13, the subject matter of Example 12 optionally includes, generating and displaying an alert on the personal electronic device of a potential anomaly.

In Example 14, the subject matter of Examples 12-13 optionally includes, wherein the first onboard system is an landing gear system of the aircraft, and wherein the first data is obtained from indicia on a strut of the landing gear system.

In Example 15, the subject matter of Examples 10-14 optionally includes, displaying an augmented visual of at least the first onboard system.

Example 16 is a non-transitory computer readable storage device including instructions, which when executed by a machine, configure the machine to: receive at least a first data obtained from imaging a first onboard system of aircraft using a camera of a personal electronic device; determine, without user input, a result of based upon the first data; and display, without user input, the result on a graphical checklist of the personal electronic device.

In Example 17, the subject matter of Example 16 optionally includes, wherein the first data is obtained from imaging indicia on the aircraft.

In Example 18, the subject matter of Example 17 optionally includes, wherein the instructions, when executed by the machine, configure the machine to perform image analysis to determine and display a desired information regarding the first onboard system, wherein the desired information includes at least a name of the first onboard system and an indication via user interface if the first onboard system is within an acceptable operational range or outside an acceptable operational range according to a type of aircraft and current weather conditions.

In Example 19, the subject matter of Example 18 optionally includes, wherein the desired information includes a measurement of a component of the first onboard system determined using the first data.

In Example 20, the subject matter of Example 19 optionally includes, wherein the instructions, when executed by the machine, configure the machine to receive second data obtained from communicating with a sensor of at least one of the first onboard system or a second onboard system of the aircraft, wherein at least the second data is obtained from the sensor of the first onboard system or the second onboard system only when the personal electronic device is brought into a close proximity with the sensor during a walk around of the aircraft.

Example 21 is at least one machine-readable medium including instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.

Example 24 is a method to implement of any of Examples 1-20.

The above Description of Embodiments includes references to the accompanying drawings, which form a part of the detailed description. The drawings show, by way of illustration, specific embodiments in which methods, apparatuses, and systems discussed herein can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

The flowchart and block diagrams in the FIGS. illustrate the architecture, functionality, and operation of possible implementations of systems, methods and computer program products according to various aspects of the present disclosure. In this regard, each block in the flowchart or block diagrams can represent a module, segment, or portion of code, which comprises one or more executable instructions for implementing the specified logical function(s). It should also be noted that, in some alternative implementations, the functions noted in the block can occur out of the order noted in the figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The functions or processes described herein can be implemented in software, hardware, human implemented procedures, or a combination thereof. The software can consist of computer executable instructions stored on computer readable media such as memory or other type of storage devices. The term "computer readable media" is also used to represent any means by which the computer readable instructions can be received by the computer, such as by different forms of wired or wireless transmissions. Further, such functions correspond to modules, which are software, hardware, firmware or any combination thereof. Multiple functions can be performed in one or more modules as desired, and the embodiments described are merely examples. The software can be executed on a digital signal processor, ASIC, microprocessor, or other type of processor operating on a computer system, such as a personal computer, server or other computer system.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) can be used in combination with each other. Other embodiments can be used, such as by one of ordinary skill in the art upon reviewing the above description. It is submitted with the understanding that it will not be used to interpret or limit the scope or meaning of the claims. Also, in the above Description of Embodiments, various features can be grouped together to streamline the disclosure. This should not be interpreted as intending that an unclaimed disclosed feature is essential to any claim. Rather, inventive subject matter can lie in less than all features of a particular disclosed embodiment. Thus, the following claims are hereby incorporated into the Description of Embodiments as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A system for aiding a pre-flight inspection of an aircraft, comprising:
a processor (102);
a memory (104);
a camera (114);
a user interface (106), the user interface including a user input system and a user output system, the user interface configured for presenting a graphical checklist for the pre-flight inspection of the aircraft; and
a communications device (112);
wherein the memory includes instructions, the instructions, when executed by the processor, cause the processor to determine a result of the pre-flight inspection for display on the graphical checklist, wherein the result is based upon at least a first data obtained from imaging a first onboard system of aircraft using the camera.

2. The system of claim 1, wherein the result is additionally based upon a second data obtained from communicating with a sensor (302) of at least one of the first onboard system or a second onboard system of the aircraft via the communications device (112), wherein, using at least the first data, the memory (104) includes instructions, the instructions, when executed by the processor (102), cause the processor to at least one of: display, via the user interface (106), an augmented visual of the first onboard system and perform image analysis to determine and display a desired information regarding the first onboard system.

3. The system of claim 1 or 2, wherein the first data is obtained from imaging indicia on the aircraft; and/or wherein the desired information includes at least a name of the first onboard system and an indication via the user interface (106) if the first onboard system is within an acceptable operational range or outside an acceptable operational range according to a type of aircraft and current weather conditions.

4. The system of any preceding claim, wherein the instructions, when executed by the processor (102), cause the processor to: generate and display an alert of a potential anomaly with the user interface (106), and/or wherein the desired information includes a measurement of a component of the first onboard system determined using the first data or a verification that the component of the first onboard system is operating correctly.

5. The system of any preceding claim, wherein the first onboard system is one of: a landing gear system (304) of the aircraft or a lighting system of the aircraft.

6. The system of claim 2, wherein at least the second data is obtained from the sensor (302) of the first onboard system or the second onboard system only when the communications device (112) is brought into a close proximity with the sensor during a walk around of the aircraft.

7. A method for completing a pre-flight inspection of an aircraft, comprising:
receiving a first data regarding a first onboard system of the aircraft using at least a camera of a personal electronic device,
determining, without user input, a result of one or more checklist items on the personal electronic device based upon the first data; and
displaying the result on the personal electronic device.

8. The method of claim 7, further comprising receiving a second data from a sensor of at least one of the first onboard system or a second onboard system of the aircraft, wherein at least the second data is obtained from the sensor of the first onboard system or the second onboard system only when the personal electronic device is brought into a close proximity with the sensor during a walk around of the aircraft.

9. The method of claim 8, further comprising determining and displaying, without user input, a desired information regarding the first onboard system, wherein the desired information includes a measurement of a component of the first onboard system determined using the first data; and optionally wherein the desired information includes an indication on the personal electronic device if the first onboard system or the second onboard system is within an acceptable operational range or outside an acceptable operational range according to a type of aircraft and current weather conditions.

10. The method of any of claims 7 to 9, further comprising generating and displaying an alert on the personal electronic device of a potential anomaly.

11. The method of any of claims 7 to 10, wherein the first onboard system is an landing gear system of the aircraft, and wherein the first data is obtained from indicia on a strut of the landing gear system.

12. The method of any of claims 7 to 11, further comprising displaying an augmented visual of at least the first onboard system.

13. A non-transitory computer readable storage device including instructions, which when executed by a machine, configure the machine to:
receive at least a first data obtained from imaging a first onboard system of aircraft using a camera (114) of a personal electronic device (100A);
determine, without user input, a result of based upon the first data; and
display, without user input, the result on a graphical checklist of the personal electronic device.

14. The storage device of claim 13, wherein the first data is obtained from imaging indicia on the aircraft and/or wherein the instructions, when executed by the machine, configure the machine to perform image analysis to determine and display a desired information regarding the first onboard system, wherein the desired information includes at least a name of the first onboard system and an indication via a user interface (106) if the first onboard system is within an acceptable operational range or outside an acceptable operational range according to a type of aircraft and current weather conditions.

15. The storage device of claim 14, wherein the desired information includes a measurement of a component of the first onboard system determined using the first data; and/or wherein the instructions, when executed by the machine, configure the machine to receive second data obtained from communicating with a sensor of at least one of the first onboard system or a second onboard system of the aircraft, wherein at least the second data is obtained from the sensor of the first onboard system or the second onboard system only when the personal electronic device (100A) is brought into a close proximity with the sensor during a walk around of the aircraft.
